Europäisches Patentamt

European Patent Office

Office européen des brevets

(11) Veröffentlichungsnummer: **0 460 462 A1**

(12) **EUROPÄISCHE PATENTANMELDUNG**

(21) Anmeldenummer: **91108418.4**

(22) Anmeldetag: **24.05.91**

(51) Int. Cl.5: **G11B 7/09**, G11B 7/13

(30) Priorität: **31.05.90 DE 4017487**

(43) Veröffentlichungstag der Anmeldung:
**11.12.91 Patentblatt 91/50**

(84) Benannte Vertragsstaaten:
**AT BE CH DE DK ES FR GB IT LI LU NL SE**

(71) Anmelder: **DEUTSCHE THOMSON-BRANDT GMBH**

**W-7730 Villingen-Schwenningen(DE)**

(72) Erfinder: **Gleim, Günter, Dipl.-Ing.**
**Oberer Sonnenbühl 22**
**W-7730 Villingen 22(DE)**
Erfinder: **Rekla, Bernd**
**Rietgasse 8**
**W-7730 VS-Villingen(DE)**
Erfinder: **Füldner, Friedrich, Dipl.-Ing.**
**Wilstorfstrasse 19**
**W-7730 Villingen-Schwenningen(DE)**

(54) **Servoregelkreis.**

(57) Bei CD-Spielern ist sowohl das Fokusfehlersignal als auch das Spurfehlersignal von die Regelung erschwerenden hochfrequenten Schwingungen überlagert, die von den auf der Platte aufgezeichneten Daten verursacht werden. Durch Differenzbildung der Ausgangssignale mehrerer Photodioden werden das Spurfehler- und das Fokusfehlersignal erzeugt.

Weil vor der Differenzbildung der Ausgangssignale der Photodioden (A, B, C, D) die hochfrequenten Anteile mittels einer Kapazität (K) kurzgeschlossen werden, sind weder im Fokus- noch im Spurfehlersignal die die Regelung erschwerenden hochfrequenten Anteile mehr enthalten.

Fig. 2

Die Erfindung betrifft einen Servoregelkreis für eine optische Abtastvorrichtung zum Fokussieren eines Lichtstrahls auf einen Aufzeichnungsträger oder zum Führen des Lichtstrahls entlang der Datenspuren des Aufzeichnungsträgers, der den Lichtstrahl auf mehrere Photodioden reflektiert, aus deren Ausgangssignalen durch Differenzbildung ein Servosignal erzeugt wird, das wegen der auf dem Aufzeichnungsträger aufgezeichneten Daten von einer hochfrequenten Schwingung überlagert ist.

Ein CD-Spieler ist z.B. mit zwei Servoregelkreisen, einem Fokusregelkreis und einem Spurregelkreis ausgestattet. Bei einem CD-Spieler, der nach dem sogenannten Dreistrahlverfahren den Aufzeichnungsträger, die Compact-Disc, abtastet, wird der Lichtstrahl eines Lasers mittels Linsen und eines Prismenstrahlteilers auf die Platte gerichtet. Im Strahlengang liegt ein optisches Gitter, damit der vom Laser erzeugte Lichtstrahl in den Hauptstrahl und die Beugungsstrahlen aufgeteilt wird.

Von der Platte wird der Hauptstrahl auf einen Vierquadrantenphotodetektor mit vier Photodioden A, B, C und D reflektiert, während der Beugungsstrahl +1. Ordnung auf eine Photodiode E und der Beugungsstrahl -1. Ordnung auf eine Photodiode F reflektiert werden. Aus den Ausgangssignalen AS, BS, CS und DS der Photodioden A, B, C und D des Vierquadrantenphotodetektors wird das Fokusfehlersignal FE = (AS + BS) - (DS + CS) für den Fokusregelkreis gebildet. Aus den Ausgangssignalen ES und FS der Photodioden E und F wird das Spurfehlersignal TE = ES - FS für den Spurregelkreis erzeugt. Wegen der auf der Platte aufgezeichneten Daten ist sowohl das Fokusfehler- als auch das Spurfehlersignal von unerwünschten hochfrequenten Anteilen überlagert, welche die Fokus- und die Spurregelung erschweren.

Es ist daher Aufgabe der Erfindung, einen Servoregelkreis gemäß Oberbegriff des Anspruchs 1 so zu gestalten, daß sich hochfrequente Überlagerungen im Servosignal nicht mehr störend auf die Regelung auswirken.

Die Erfindung löst diese Aufgabe dadurch, daß vor der Differenzbildung die hochfrequenten Schwingungen mittels einer Kapazität kurzgeschlossen werden.

Es zeigen

Figur 1     eine Anordnung aus einem Vierquadrantenphotodetektor und den Photodioden eines Spurregelkreises

Figur 2     eine Schaltungsanordnung zur Erzeugung des Fokusfehlersignals gemäß Anspruch 2

Figur 3     eine Schaltungsanordnung zur Erzeugung des Fokusfehlersignals gemäß Anspruch 3

Figur 4     eine Schaltungsanordnung zur Erzeugung des Spurfehlersignals gemäß Anspruch 4

Figur 5     eine Schaltungsanordnung zur Erzeugung des Spurfehlersignals gemäß Anspruch 5

Figur 6     das Fokusfehlersignal beim Stand der Technik

Figur 7     das Spurfehlersignal beim Stand der Technik.

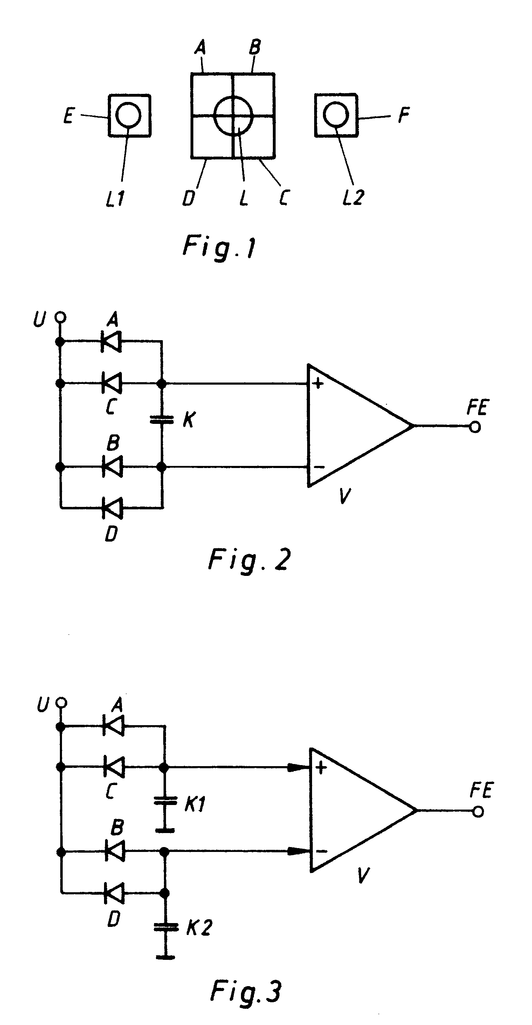

Die Figur 1 zeigt die bei CD-Spielern übliche Anordnung des Vierquadrantenphotodetektors, auf den der Hauptstrahl L von der Platte reflektiert wird, die Photodiode E, auf die der Beugungsstrahl +1. Ordnung L1 reflektiert wird und die Photodiode F, auf die der Beugungsstrahl -1. Ordnung L2 reflektiert wird. Der Vierquadrantenphotodetektor und die Photodioden E und F sitzen auf einem gemeinsamen Träger.

Am Beispiel der in Figur 2 gezeigten Schaltungsanordnung wird erläutert, wie das Fokusfehlersignal FE für einen Fokusregelkreis erzeugt wird.

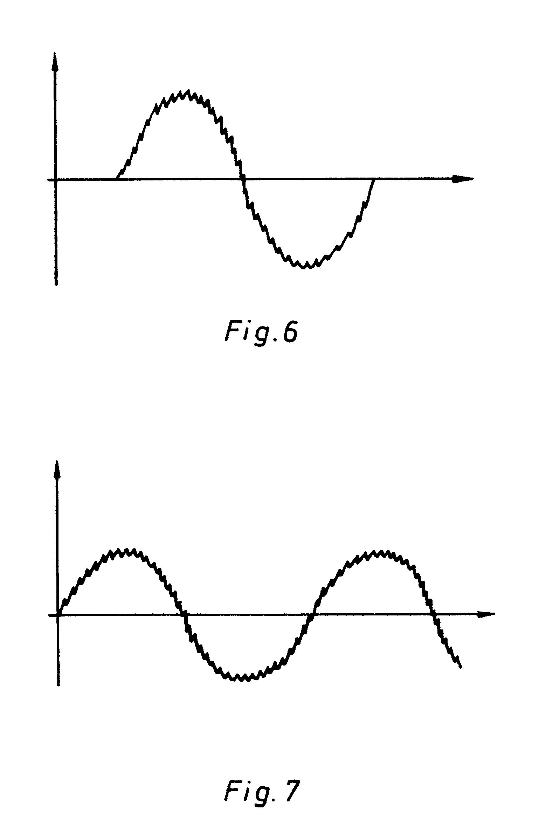

In Figur 6 ist das Fokusfehlersignal beim Stand der Technik dargestellt. Es hat einen sinusförmigen Verlauf und ist von einer hochfrequenten Schwingung überlagert, welche die Fokusregelung erschwert.

Bei dem erfindungsgemäßen Fokusregelkreis in Figur 2 liegen die miteinander verbundenen einen Elektroden der vier Photodioden A, B, C und D an einer Spannung U. Die anderen Elektroden der Photodioden A, C sind mit dem einen Eingang eines Differenzverstärkers V verbunden, während die anderen Elektroden der Photodioden B und D an den anderen Eingang des Differenzverstärkers V angeschlossen sind. Zwischen den beiden Eingängen des Differenzverstärkers V ist eine Kapazität K vorgesehen, welche die hochfrequenten Überlagerungen in den Ausgangssignalen der Photodioden A, B, C und D kurzschließt. Deshalb sind im Fokusfehlersignal FE keine die Regelung störenden und erschwerenden hochfrequenten Überlagerungen mehr enthalten.

Bei dem in Figur 3 abgebildeten Fokusregelkreis liegen die Anoden der Dioden A, B, C und D über je eine Kapazität K1 und K2 auf Masse. Die Kapazität K zwischen den Eingängen des Differenzverstärkers V ist daher nicht mehr erforderlich.

In der Figur 7 ist das sinusförmige Spurfehlersignal TE beim Stand der Technik gezeigt, das ebenso wie das Fokusfehlersignal von hochfrequenten Schwingungen überlagert ist.

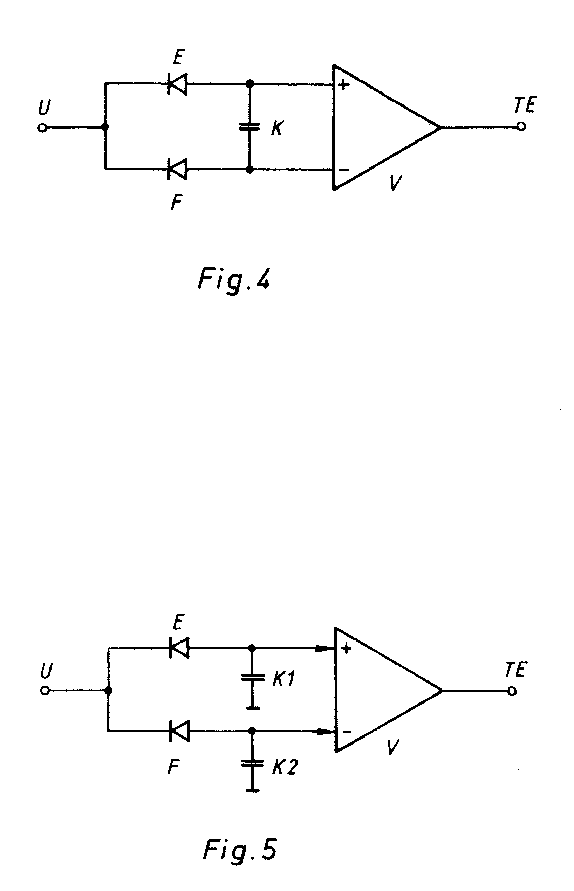

Anhand der in Figur 4 abgebildeten Schaltungsanordnung wird erläutert, wie das Spurfehlersignal TE erzeugt wird.

An den einen Elektroden der Photodioden E und F liegt eine Spannung U, während zwischen den anderen Elektroden, die mit den Eingängen eines Differenzverstärkers V verbunden sind, eine Kapazität K vorgesehen ist. Weil die Kapazität K ebenso wie bei der Anordnung in Figur 2 die hochfrequenten Anteile in den Ausgangssignalen der Photodioden kurzschließt, sind im Spurfehlersignal TE keine hochfrequenten Überlagerungen mehr enthalten, die beim Stand der Technik die Spurregelung erschweren.

Anstatt zwischen den beiden Photodioden E und F die Kapazität K vorzusehen, sind bei dem in Figur 5 dargestellten Spurregelkreis die Anoden der beiden Photodioden E und F über je eine Kapazität K1 und K2 mit Masse verbunden.

Die Erfindung ist für optische Aufzeichnungs- und Wiedergabegeräte geeignet, die einen Lichtstrahl mittels eines Fokusregelkreises auf einen Aufzeichnungsträger fokussieren und den Lichtstrahl mittels eines Spurregelkreises entlang der Datenspuren des Aufzeichnungsträgers führen. Als Beispiele seien CD-Spieler, Videoplattenspieler, DRAW-Disc-Spieler und magneto-optische Geräte genannt.

**Patentansprüche**

1. Servoregelkreis für eine optische Abtastvorrichtung zum Fokussieren eines Lichtstrahls auf einen Aufzeichnungsträger oder zum Führen des Lichtstrahls entlang der Datenspuren des Aufzeichnungsträgers, der den Lichtstrahl auf mehrere Photodioden (A, B, C, D, E, F) reflektiert, aus deren Ausgangssignalen durch Differenzbildung ein Servosignal erzeugt wird, indem die Ausgangssignale einem Differenzverstärker (V) zugeführt werden, der das Servosignal erzeugt, das wegen der auf dem Aufzeichnungsträger aufgezeichneten Daten von einer hochfrequenten Schwingung überlagert ist, **dadurch gekennzeichnet,** daß entweder zwischen den Eingängen des Differenzverstärkers (V) eine Kapazität (K) liegt oder daß die einen Elektroden der Photodioden (A, B, C, D, E, F) über je eine Kapazität (K1, K2) auf Masse liegen.

2. Servoregelkreis nach Anspruch 1, **dadurch gekennzeichnet,** daß es sich um einen Fokusregelkreis handelt, daß der Lichtstrahl vom Aufzeichnungsträger auf einen Vierquadrantenphotodetektor mit vier Photodioden (A, B, C, D) reflektiert wird, daß an den einen miteinander verbundenden Elektroden der vier Photodioden (A, B, C, D) eine Spannung (U) liegt, daß die anderen Elektroden je zweier Photodioden (A, C bzw. B, D) miteinander verbunden sind und daß zwischen den Verbindungspunkten der anderen Elektroden eine Kapazität (K) liegt.

3. Servoregelkreis nach Anspruoh 1, **dadurch gekennzeichnet,** daß es sich um einen Fokusregelkreis handelt, daß der Lichtstrahl vom Aufzeichnungsträger auf einen Vierquadrantenphotodetektor mit vier Photodioden (A, B, C, D) reflektiert wird, daß an den einen miteinander verbundenden Elektroden der vier Photodioden (A, B, C, D) eine Spannung (U) liegt, daß die anderen Elektroden je zweier Photodioden (A, C bzw. B, D) miteinander verbunden sind und daß die anderen Elektroden über je eine Kapazität (K1, K2) auf Masse liegen.

4. Servoregelkreis nach Anspruch 1, **dadurch gekennzeichnet,** daß es sich um einen Spurregelkreis handelt, daß vom Aufzeichnungsträger der Beugungsstrahl +1. Ordnung (L1) auf eine erste Photodiode (E) und daß der Beugungsstrahl -1. Ordnung (L2) auf eine zweite Photodiode (F) reflektiert werden, daß an den miteinander verbundenen einen Elektroden der beiden Photodioden (E, F) eine Spannung (U) liegt und daß zwischen den anderen Elektroden eine Kapazität (K) liegt.

5. Servoregelkreis nach Anspruch 1, **dadurch gekennzeichnet,** daß es sich um einen Spurregelkreis handelt, daß vom Aufzeichnungsträger der Beugungsstrahl +1. Ordnung (L1) auf eine erste Photodiode (E) und daß der Beugungsstrahl -1. Ordnung (L2) auf eine zweite Photodiode (F) reflektiert werden, daß an den miteinander verbundenen einen Elektroden der beiden Photodioden (E, F) eine Spannung (U) liegt und daß die anderen Elektroden über je eine Kapazität (K1, K2) auf Masse liegen.

Fig.1

Fig. 2

Fig.3

4

Fig. 4

Fig. 5

Fig.6

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 663 749 (BIERHOFF ET AL.) <br> * das ganze Dokument * <br> – – – | 1-5 | G 11 B 7/09 <br> G 11 B 7/13 |
| X | EP-A-0 274 031 (DEUTSCHE THOMSON -BRANDT GMBH) <br> * Spalte 3, Zeilen 1 - 12; Figuren 1, 2 * <br> – – – | 1-5 | |
| A | ELECTRONIC COMPONENTS AND APPLICATIONS. vol. 6, no. 4, 1984, EINDHOVEN NL Seiten 209 - 215; NIJHOF J.: "An integrated approach to CD players. Part 1: The optical pick-up" <br> * das ganze Dokument * <br> – – – | 1-5 | |
| A | CH-A-3 873 20 (PAILLARD S.A.) <br> * das ganze Dokument * <br> – – – – – | 1 | |

RECHERCHIERTE SACHGEBIETE (Int. Cl.5)

G 11 B

Der vorliegende Recherchenbericht wurde für alle Patentansprüche erstellt

| Recherchenort | Abschlußdatum der Recherche | Prüfer |
|---|---|---|
| Den Haag | 03 September 91 | NANOS A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument